(19) Europäisches Patentamt

European Patent Office

Office européen des brevets

(11) **EP 4 677 859 B1**

(12) **EUROPEAN PATENT SPECIFICATION**

(45) Date of publication and mention
of the grant of the patent:
**01.07.2026 Bulletin 2026/27**

(21) Application number: **24729601.5**

(22) Date of filing: **06.05.2024**

(51) International Patent Classification (IPC):
***H04N 23/90*** *(2023.01)*     ***G06T 7/33*** *(2017.01)*

(52) Cooperative Patent Classification (CPC):
**G06T 7/337; H04N 23/90;** G06T 2207/10016;
G06T 2207/30244

(86) International application number:
**PCT/US2024/028042**

(87) International publication number:
**WO 2025/234981 (13.11.2025 Gazette 2025/46)**

(54) **HYBRID OPTICAL FLOW ESTIMATION**

HYBRIDE OPTISCHE FLUSSSCHÄTZUNG

ESTIMATION DE FLUX OPTIQUE HYBRIDE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**14.01.2026 Bulletin 2026/03**

(73) Proprietor: **Google LLC**
**Mountain View, CA 94043 (US)**

(72) Inventors:
• **ZHANG, Guanghua**
**Mountain View, CA 94043 (US)**
• **NISHIMURA, Jun**
**Mountain View, CA 94043 (US)**
• **LIN, Chung-Yuan**
**Taipei 110 (TW)**
• **CHOU, Chan-Min**
**Taipei 110 (TW)**

(74) Representative: **Marks & Clerk GST**
**1 New York Street**
**Manchester M1 4HD (GB)**

(56) References cited:
WO-A2-2014/193670     US-A1- 2007 076 982
US-A1- 2017 178 355     US-A1- 2017 358 085
US-A1- 2021 334 934     US-A1- 2023 342 889

**Description**

**TECHNICAL FIELD**

The present disclosure relates to image alignment technology. More particularly, implementations of the present disclosure are directed to image alignment using hybrid optical flow estimation.

**BACKGROUND**

Image alignment of two or more images can be useful for many imaging applications and generally refers to geometrically mapping pixels of two or more images of a same scene. The images used for alignment can be acquired by the same camera at different times or different cameras having different viewpoints and settings. Two-dimensional geometric pixel mapping can be described as a pixel located in a first image that maps to a source pixel of a second image, where the difference between the mapped pixels is referred to as a motion vector. Such motion vectors as well as the camera settings, the differences in viewpoints, and other variables (e.g., camera movement, lens distortion, perspective shift) impact proper image alignment between two or more images that are the subject of such alignment.
US 2021/334934 A1 discloses a feature extractor that determines reference feature locations from a portion of a reference image and corresponding feature locations from a portion of a warp image. A transform module determines a homography transform function that transforms versions of the corresponding feature locations to the reference feature locations. The homography transform function has an error below a threshold level, where the error represents a difference between the transformed corresponding feature locations and the reference feature locations. The local transform module generates transform parameters by processing the homography transform function. A warper circuit warps the portion of the warp image by at least applying the transform parameters to generate a portion of a warped image.
WO 2014/193670 A2 discloses a method of reconstruction of images from an in vivo multi-camera capsule. The capsule comprises two cameras with overlapped fields of view (FOVs). Intra-image based pose estimation is applied to the sub-images associated with the overlapped area to improve the pose estimation for the capsule device. Two images corresponding to the two FOVs are fused by using disparity-adjusted, linear weighted sum of the overlapped sub-images. The images from the multi-camera capsule are stitched for time-space representation.

**SUMMARY**

Implementations of the present disclosure are directed to image alignment technology. More particularly, implementations of the present disclosure are directed to image alignment using hybrid optical flow estimation based on a separate analysis of global motion vectors (GMV) and local motion vectors (LMV). The GMV and LMV are separately identified for each pixel of images process for alignment, by using multiple sets of device position data. The separate treatment of GMV and LMV resolves issues stemming from incorrect assumption of inexistence of motion.

In some implementations, a computer-implemented method includes: receiving, from one or more cameras and inertia sensors of a user device, data including at least two images and device position data, the at least two images capturing portions of an image scene; determining, based on the device position data, a homography indicative of a movement of the user device; labeling, based on the homography, pixels of the at least two images using motion vectors including global motion vectors (GMV) or local motion vectors (LMV), the GMV being assigned to portions of the at least two images identified, at a first resolution, by using the homography as including global motion, and the LMV being assigned to remaining portions of the at least two images excluded from the portions of the at least two images labeled with GMV; updating the GMV and the LMV for each of the at least two images at a second resolution, wherein the second resolution is higher than the first resolution; and determining an output image by aligning the at least two images using the updated GMV and the LMV.

The present disclosure also provides a computing device including: an inertia sensor; one or more cameras; and one or more processors performing operations including: receiving, from the one or more cameras and the inertia sensor of a user device, data including at least two images and device position data, the at least two images capturing portions of an image scene; determining, based on the device position data, a homography indicative of a movement of the user device; labeling, based on the homography, pixels of the at least two images using motion vectors including global motion vectors (GMV) or local motion vectors (LMV), the GMV being assigned to portions of the at least two images identified, at a first resolution, by using the homography as including global motion, and the LMV being assigned to remaining portions of the at least two images excluded from the portions of the at least two images labeled with GMV; updating the GMV and the LMV for each of the at least two images at a second resolution, wherein the second resolution is higher than the first resolution; and determining an output image by aligning the at least two images using the updated GMV and the LMV.

The present disclosure also provides a non-transitory computer-readable media encoded with a computer program, the computer program including instructions that when executed by one or more computers cause the one or more computers to perform operations including: receiving, from one or more cameras and inertia sensors of a user device, data including at least two images and device position data, the at least two images capturing portions of an image scene; determining, based on the device position data, a homography indicative of a movement of the user device; labeling, based on the homography, pixels of the at least two images using motion vectors including global motion vectors (GMV) or local motion vectors (LMV), the GMV being assigned to portions of the at least two images identified, at a first resolution, by using the homography as including global motion, and the LMV being assigned to remaining portions of the at least two images excluded from the portions of the at least two images labeled with GMV; updating the GMV and the LMV for each of the at least two images at a second resolution, wherein the second resolution is higher than the first resolution; and determining an output image by aligning the at least two images using the updated GMV and the LMV.

The foregoing and other implementations can each optionally include one or more of the following features, alone or in combination. In particular, implementations can include one or more of the following features:

In a first aspect, combinable with any of the previous aspects, the at least two images include a moving element. The at least two images include a first image captured by a first camera having a first setting and a second image captured by a second camera having a second setting different from the first setting. The first camera and the second camera are included in a single device. The computer-implemented method or the operations further include determining a motion range by processing the device position data to determine whether either of the global motion or the local motion is larger than a motion limit for a particular portion of the at least two images. The computer-implemented method or the operations further include refining the homography using visual features or correspondence of motion vectors for the pixels of the at least two images. The LMV is determined using group-based template matching. Each of the motion vectors includes a sum of an integer motion vector and a fractional motion vector. The motion vectors define a vector map including the LMV in a first portion of the map and the GMV in a second portion of the map. The computer-implemented method or the operations further include converting a pixel motion type and the vector map into a multi-resolution representation. The multi-resolution representation includes a quadtree data structure. The inertia sensor includes a gyroscopic sensor and wherein the GMV is determined for a block of image rows for each gyroscopic reading obtained from the gyroscopic sensor.

These and other implementations can each optionally include one or more of the following advantages. The described rule image alignment replacement actions are integrated with the rules instead of being a disconnected step, such that data collection includes images and position data recorded within the same time interval. The data collection is automatically triggered leading to an optimization of dataset image alignment based on a homography indicative of a movement of the user device. The described approach can implement powerful lookup and best record functions for rule image alignment replacement actions, which minimizes or eliminates corrupted and inconsistent data records by labeling, based on the homography, pixels of the at least two images using motion vectors comprising global motion vectors (GMV) or local motion vectors (LMV). The updates of GMV and LMV at different resolutions increases the result accuracy, which can be set by repeating the update until an error of the image alignment is below a set error variation threshold. The update of GMV and LMV is optimized using a prediction model that is trained on particular image types, which increases the processing speed and the result accuracy. Image alignment data preparation replacement steps of the described implementations can be auto generated from rule image alignment replacement actions. Rule image alignment replacement actions, as described, are less error prone, easier to run, and easier to test because a user does not have to manually interpret how to fix failed rows in an image alignment preparation for replacements. Instead, automatic error detection can be included in the update of the GMV and the LMV for each of the at least two images at a second resolution. Rule image alignment actions leverage outputs of prediction models based on artificial intelligence to suggest previous image alignment actions for new datasets with similar structures for determining an output image by aligning the at least two images using the updated GMV and the LMV. The described prediction models can also be leveraged to generate the rule image alignment action definitions for optimization of data correction process.

It is appreciated that methods in accordance with the present disclosure can include any combination of the aspects and features described herein. That is, methods in accordance with the present disclosure are not limited to the combinations of aspects and features specifically described herein, but also include any combination of the aspects and features provided.

The details of one or more implementations of the present disclosure are set forth in the accompanying drawings and the description below. Other features and advantages of the present disclosure will be apparent from the description and drawings, and from the claims.

## DESCRIPTION OF DRAWINGS

FIG. 1A depicts an example system in accordance with implementations of the present disclosure.
FIG. 1B depicts an example device in accordance with implementations of the present disclosure.
FIG. 2 depicts an example conceptual architecture of an example system 200 in accordance with implementations of the present disclosure.
FIG. 3A depicts an example of incorrectly aligned images generated by a single camera, in accordance with implementations of the present disclosure.

FIG. 3B depicts example images including a static background and a moving foreground, in accordance with implementations of the present disclosure.

FIG. 3C depicts example images captured by different cameras having different viewpoints, in accordance with implementations of the present disclosure.

FIG. 4A depicts an example image alignment process that can be executed in accordance with implementations of the present disclosure.

FIG. 4B depicts another example image alignment process that can be executed in accordance with implementations of the present disclosure.

FIG. 5 is a schematic illustration of example computer systems that can be used to execute implementations of the present disclosure.

Like reference symbols in the various drawings indicate like elements.

## DETAILED DESCRIPTION

Implementations of the present disclosure are directed to image alignment technology. More particularly, implementations of the present disclosure are directed to image alignment of two or more images using hybrid optical flow estimation based on a separate analysis of global motion vectors (GMV) and local motion vectors (LMV). Some of the applications of image alignment have been developed for mobile phones. The compact structure of a mobile phone limits the integrated cameras to having small-aperture lenses. Additionally, a significant portion of the images captured by mobile phone are of scenes with limited luminosity. The aperture of the lenses and the low scene luminosity can lead to noisy and poor dynamic range images. Neither increasing gain nor increasing exposure time can attain accurate results. Increasing gain can lead to high noise and increasing exposure can lead to blurry images. Attempting to overcome these limitations, traditional techniques of merging images works based on the assumption that only in-plane offset occurs between the mapped images. Although within short (e.g., milliseconds to seconds) exposure time and small camera motion, two adjacent images with small differences can be regarded as in-plane offset, small differences can cumulate to bigger ones, which cannot be canceled by in-plane shift anymore, such that noticeable angles can appear between images. As a result, the in-plane offset assumption limits the number of aligned images and restrains the capability of denoising the images.

In some implementations, the images are acquired by multiple cameras included in a device, which additionally includes an inertia sensor. The images are acquired simultaneously with device position data recorded by the inertia sensor. The device position data is used to determine homography data between the two images by generating a three-by-three rotation matrix from the device position data. The three-by-three rotation matrix is used to estimate a three-dimensional translation vector by matching feature points detected from the two images. The homography data is used to generate an initial pixel map indicative of an initial estimate of the GMV and LMV for each pixel of the images. The initial pixel map is updated at a higher resolution within a Gaussian Pyramid structure using device position data subsequent in time to the initial device position reading. The updated pixel map is used to generate an output image that aligns the captured images.

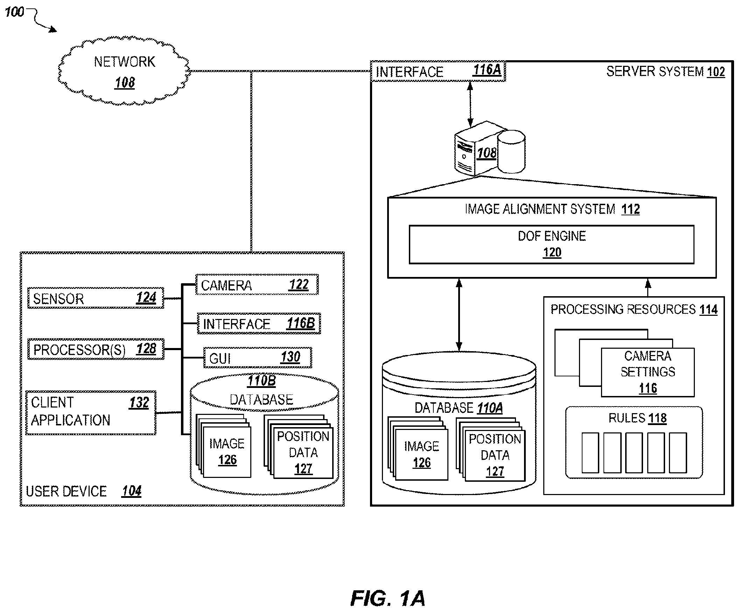

Addressing the limitations of traditional image alignment, the approach described in the present disclosure provides optimized and consistent alignment of images. The described image alignment solution addresses the offset by tackling GMV and LMV pixels separately using multiple sets of device position data. The separate treatment of GMV and LMV resolves the described issues by appropriately addressing movement detection in each portion of an image rather than incorrectly assuming inexistence of motion. The separate treatment of GMV and LMV also resolves image alignment issues raising from incorrect assumption of a particular type of motion that might only be applicable to a limited portion of the image rather than the entire image. The integration of multiple sets of device position data in the described approach, increases the accuracy of GMV and LMV pixel identification, which can optimize image mapping in terms of accuracy of results. Further advantages of the described image alignment techniques are described in detail with reference to FIGS. 1A, 1B, 2, 3A-3C, 4A, 4B, and 5.

FIG. 1A depicts an example system 100 in accordance with implementations of the present disclosure. In the depicted example, the example system 100 includes a private cloud system 102, one or more user devices 104, and a network 106. Although shown separately, in some implementations, functionality of two or more components of the example system 100 or the server system 102 can be provided by a single system or server. In some implementations, the functionality of one illustrated example system 100, server, or component can be provided by multiple systems, servers, or components, respectively.

The server system 102 includes one or more server devices 108 hosting a database (e.g., processors, memory) 110A, an image alignment system 112, and image alignment resources 114 including one or more camera settings 116 and one or more image alignment rules 118. The image alignment system 112 includes a dense optical flow (DOF) engine 120.

The user device 104 includes one or more cameras 122, one or more sensors 124, one or more processors 128, an interface 116B, a graphical user interface (GUI) 130, an application 132, and a database (e.g., processors, memory) 110B.

The application 132 can be executed (as a service) by the user device 104. The application 132 can include instructions to trigger the camera 122 and the sensor 124 to acquire data (images and position data) within a time interval. The user device 104 can transmit the acquired data (image data 126 and position data 127) to be stored by one of the databases 110A, 110B and to be processed by the image alignment system 112.

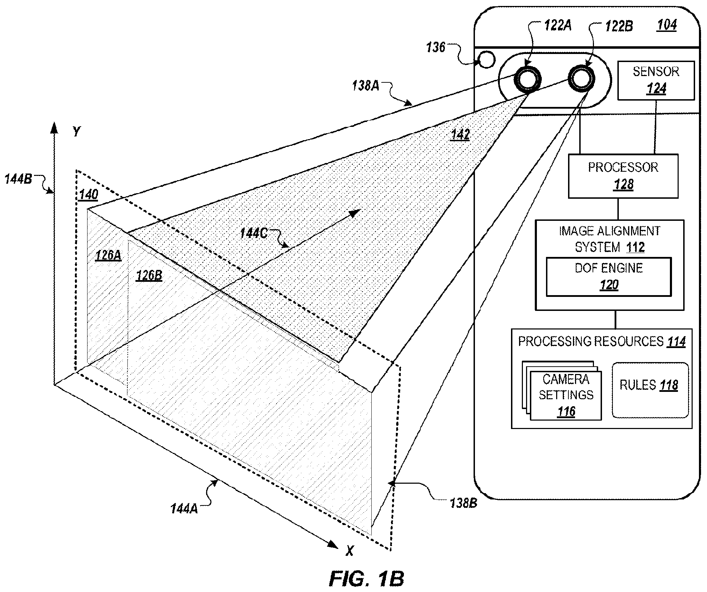

In some examples, the user device 104 includes any appropriate type of computing device such as a desktop computer, a laptop computer, a handheld computer, a tablet computer, a personal digital assistant (PDA), a cellular telephone, a network appliance, a camera, a smart phone, an enhanced general packet radio service (EGPRS) mobile phone, a media player, a navigation device, an email device, a game console, or an appropriate combination of any two or more of these devices or other data processing devices. In some examples, the user devices 104 can communicate with the server system 102 over the network 106. In some implementations, the cameras 122 (e.g., a digital camera, including visible light and infrared light cameras) can be provided to capture images 126 of scenes located in front and/or in the back of the user device 104 (as shown in FIG. 1B) that can be synchronized with the sensor 124 capturing (at a higher recording rate than the frequency at which images are acquired) device position data 127. In some implementations, the cameras 122 can be in electrical communication with the local processor 128 and/or a remote processing module of the server device 108, which may process images 126 from the cameras 122 and position data 127 from the sensor 124. The sensor 124 can include any type of sensor configured to capture inertial measurements, such as, accelerometers, compasses, global positioning system (GPS) units, gyroscopic sensors, and/or other sensors. The cameras 122 and the sensor 124 can transmit the captured data, to the server system 102, over the network 106.

In some implementations, the network 106 can include a large computer network, such as a local area network (LAN), a wide area network (WAN), the Internet, a cellular network, a telephone network (e.g., PSTN) or an appropriate combination thereof connecting any number of communication devices, mobile computing devices, fixed computing devices and server systems.

In the example of FIG. 1A, the server system 102 can include a computing system configured to execute image alignment processes. The server system 102 can include a server device 108 that, e.g., can represent various forms of servers including, but not limited to a web server, an application server, a proxy server, a network server, and/or a server pool. In general, server systems 102 accept requests for image alignment applications as services and provides such microservices to any number of user devices (e.g., the user devices 104 over the network 106).

The image alignment system 112 can provide image alignment commands that can align images 126. The image alignment system 112 can verify accuracy and correctness of image alignment of images 126 according to position data 127. The image alignment system 112 can use the image alignment resources 114 (also referred to herein as processing resources 114) to control the data recording (e.g., image capture). The image alignment resources 114 represent resources that are provisioned within the server system 102 for use by the client application 132 and the image alignment system 112. Example image alignment resources 114 can include, without limitation, camera settings 116, rules 118, and the like. In some examples, the image alignment mechanism for the image data 126 and position data 127 can be provisioned within the server system 102 and can be automatically adjusted according to camera settings 116 or in response to image alignment demands received from the user devices 104 (e.g., in response to an error detected by an application executed by the user device 104). The processing of the alignment of the resources server system 102 can be executed by the client device facilitating direct image alignment or alternatively, can be executed by remote image alignment resources 114 of the server system 102.

The DOF engine 120 can include a prediction model. The prediction model can be a trainable artificial intelligence model (e.g., machine learning model). The prediction model can include various layers of a neural network that are configured to generate machine learning inferences by performing large quantities of computations (e.g., matrix multiplications). Computation processes performed within a neural network layer (e.g., a convolutional layer) can include multiplying an input activation (e.g., a first operand) with a weight (e.g., a second operand) on one or more cycles and performing an accumulation of products over many cycles. An output activation is generated based on multiply and accumulation operations performed on the two operands.

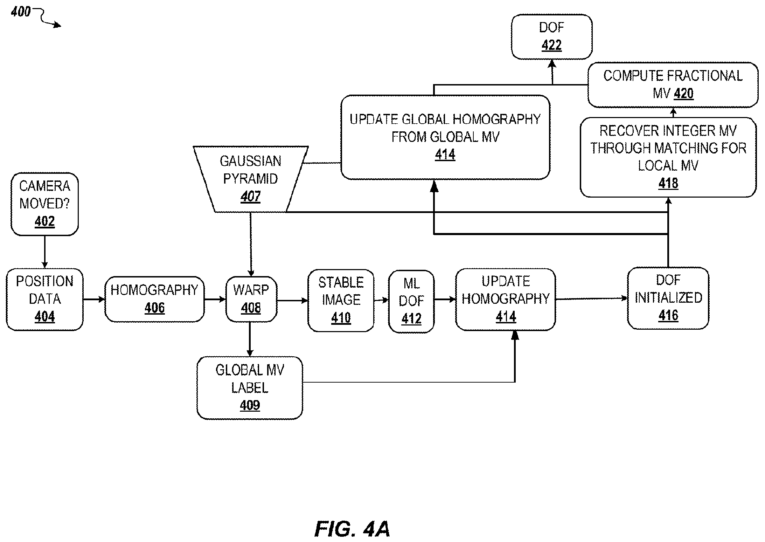

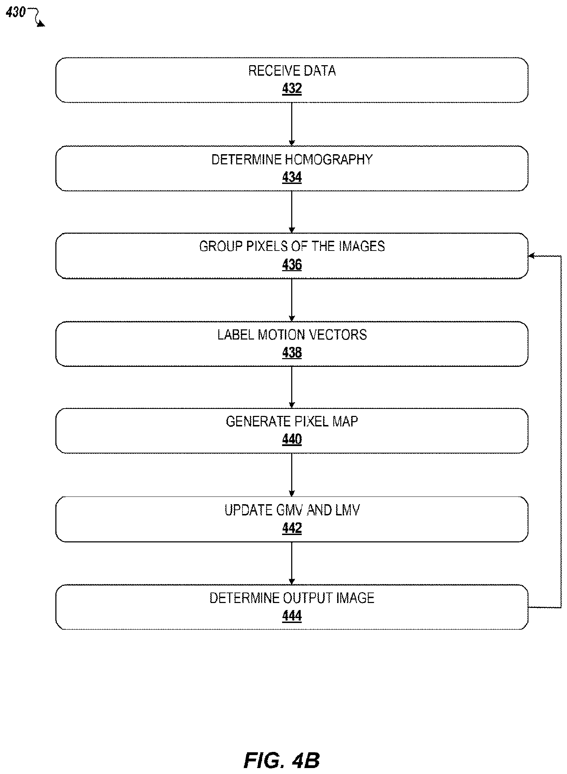

The DOF engine 120 can include a prediction model trained to predict image alignment actions applicable to images 126 based on several mapping factors (e.g., position data 127). In other words, the trained prediction model of the DOF engine 120 can map the images 126 according to image alignment operations, as described with reference to FIGS. 4A and 4B. During a training phase of the prediction models of the DOF engine 120, some image alignment operations can be marked as "favorite" for particular image types and can be saved as templates for future use in connection to mapped image alignment rules. The aligned images, generated by the DOF engine 120, can be stored by any of the databases (e.g., processors, memory) 110A, 110B.

The databases (e.g., processors, memory) 110A, 110B can include any type of database module and persistencies that can take the form of volatile and/or non-volatile memory including, without limitation, magnetic media, optical media, random access memory (RAM), read-only memory (ROM), removable media, or any other suitable local or remote memory component. The databases (e.g., processors, memory) 110A, 110B can store image data 126 and position data 127 that can be mapped according to image alignment rules 118 for ensuring image alignment correctness. The databases 110A, 110B can be homogeneous such that all microservices related to an application use an in-memory database. The databases 110A, 110B can be heterogeneous databases that include specialized databases, such as graph databases, vector databases, time-series databases or other database types related to image alignment functions. In some implementations, other forms of persistencies can be used, for example, object datastores.

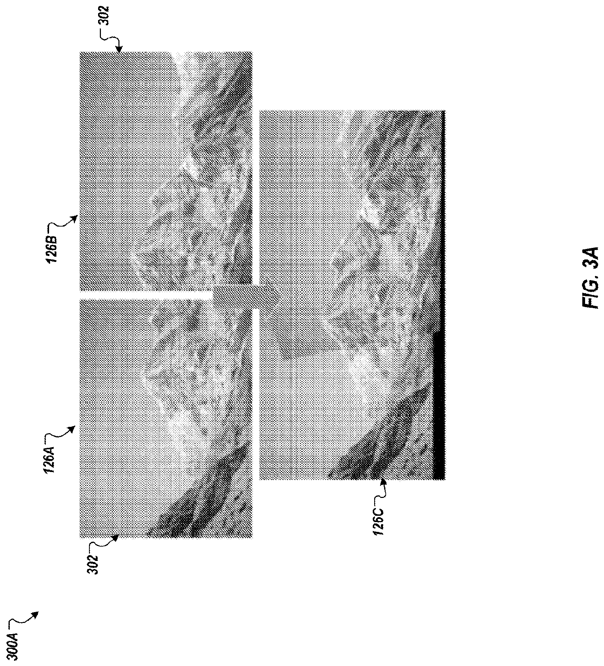

FIG. 1B depicts an example user device 104 in accordance with implementations of the present disclosure. The user device 104 can include two or more cameras 122A, 122B (as described with reference to FIG. 1A), a sensor 124 (as described with reference to FIG. 1A), a processor 128 (as described with reference to FIG. 1A), an image alignment system 112 (as described with reference to FIG. 1A), processing resources 114 (as described with reference to FIG. 1A), and a light source 136. In some implementations, the cameras 122A, 122B may include an image capture device that can be activated by the processor 128 in parallel with an activation of the light source 136. The synchronized activation of the light source 136 with the image capture can increase a luminosity of an imaged scene by projecting light towards fields of view 138A, 138B of the cameras 122. In some implementations, the cameras 122A, 122B can be included a frame of the user device 104 in a proximity to the light source 136. The images 126A, 126B are spaced from the camera 122A, 122B by a distance on X-axis 144A or the Y-axis 144B. The X-axis 144A can be perpendicular to the optic axis 144C of the cameras 122A, 122B oriented from the cameras 122A towards objects of the scene 140 that can be distributed between the background and the foreground, as discussed with more detail with reference to FIGS. 3A-3C.

With continued reference to FIG. 1B, the cameras 122A, 122B and the sensor 124 are operatively coupled by communications links, such as by a wired lead or wireless connectivity, to the processor 128, which can be mounted in a variety of configurations, such as fixedly attached to the frame of the user device 104, such that a motion of the user device affects image capturing and data recorded by the sensor 124. The processor 128 can include a local processing system and a data processing system, such as a hardware processor, as well as digital memory, such as non-volatile memory (e.g., flash memory or hard disk drives), both of which can be utilized to assist in the processing, caching, and storage of data. Optionally, the processor 128 may include one or more central processing units (CPUs), graphics processing units (GPUs), dedicated processing hardware, and so on. The data may include data a) captured from the cameras 122A, 122B (such as image capture devices) and the sensor 124, such as microphones, inertial measurement units, accelerometers, compasses, GPS units, radio devices, gyros, and/or other sensors disclosed herein; and/or b) acquired and/or processed using the image alignment system 112.

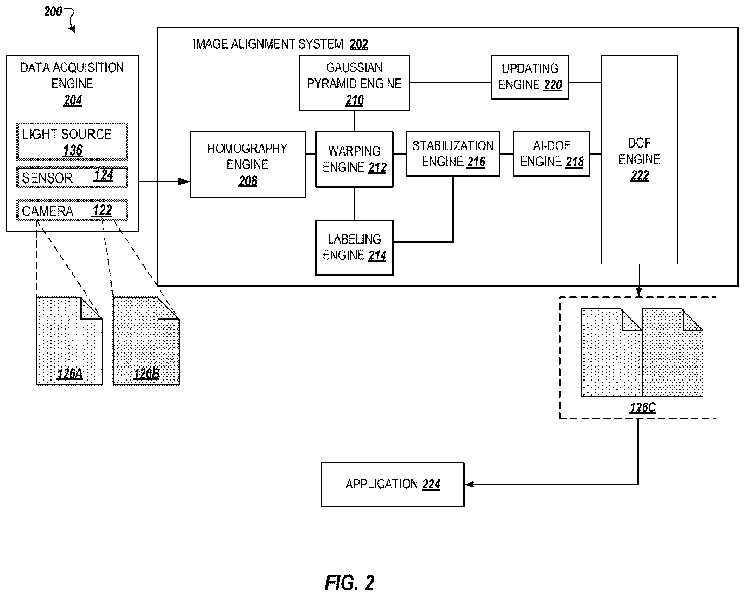

FIG. 1B illustrates the user device 104 configured as an image capturing system for generating different images 126A, 126B using different cameras 122A, 122B, where the user device 104 can move between subsequent image acquisitions relative to the imaged scene. The motion can be detected by the sensor 124. The cameras 122A, 122B can be spaced apart such that, when imaging a scene 140 including a physical object in space, can generate a slightly different images 126A, 126B of the scene and the object, having an overlap corresponding to the overlapping field of view 142. The differences between the images 126A, 126B can be referred to as optical disparity. The images 126A, 126B can include, in addition to the differences related to the optical disparity, other differences that can be related to camera settings. The image alignment system 112 can be configured to process the distinct images 126A, 126B that are corresponding to the different views of the scene 140 that would be seen by each camera 122A, 122B from different locations. Further details regarding the functions and components of the image alignment system 112 are described with reference to FIG. 2.

FIG. 2 depicts an example conceptual architecture of an example system 200 in accordance with implementations of the present disclosure. The example system 200 includes an image alignment system 202 (e.g., the image alignment system 112 described with reference to FIGS. 1A and 1B) in accordance with implementations of the present disclosure. In the example of FIG. 2, a data acquisition engine 204 is in communication with the image alignment system 202 to transmit images 126A, 126B (recorded by cameras 122 during activation of the light source 136) and device position data (recorded by sensor 124, during image acquisition) to the image alignment system 202. In some examples, the settings of the cameras 122 (e.g., frequency resolution, exposure, gain, etc.), the settings of the sensor 124 (e.g., frequency of position detection), and the settings of the light source 136 can be controlled by the data acquisition engine 204. The data acquisition engine 204 can be configured to detect a completion of data acquisition and can automatically transmit the recorded data to the image alignment system 202 in response to detecting the completion of data acquisition. As described in further detail herein, the image alignment system 202 processes the images 126A, 126B to generate an output image 126C, using multiple processing engines including a homography engine 208, a Gaussian pyramid engine 210, a warping engine 212, a labelling engine 214, a stabilization engine 216, an artificial intelligence (AI) DOF engine 218, an updating engine 220, and a DOF engine 222.

The homography engine 208 is configured to process device position data received from the sensor 124 to determine a homography. Homography is indicative of a rotation and a transition of the cameras 122 during recording of the images 126A, 126B. In short exposure condition, two adjacent images 126A, 126B can be regarded as two planes. Four pairs of points in the two images the images 126A, 126B correspond to a unique homography. When more than four pairs of points are detected, homography can be obtained by a least square method, which can indicate in-plane rotation and transition. Motions of the cameras 122 that go beyond in-plane rotation and transition, can be derived from device position data received from the sensor 124. For example, the corresponding angular velocity, start time of each exposure and actual exposure time are being recorded. The camera rotation can be recovered from integrating the device position data (e.g., gyroscopic data) received from the sensor 124 (e.g., gyroscopic sensor). To account for measurement noise that causes motion drift, the computed homography can be corrected by using, e.g., Unscented Kalman filter with homography from inertia senor as initial guess and feature points as observation. Applying the Unscented Kalman filter, a first image 126A is treated as a target image and the second image 126B as the current image. The relation between $i^{th}$ (i=1,2,...,n) matching points detected in the target image (xi = $[x_i, y_i, 1]^T$ ) and the current image (xi = $[x_i, y_i, 1]^T$) can be written as: xi = $Hx_i$, where H is the homography including a matrix of motion vectors (GMV and LMV).

The Gaussian pyramid engine 210 is configured to apply a Gaussian pyramid-based alignment algorithm to fix possible offset errors in the estimated homography of a current frame, generated by the homography engine 208. For example, the Gaussian pyramid engine 210 can update GMV and LMV at a higher resolution within the Gaussian Pyramid structure (starting from a low resolution and gradually increasing the resolution, by invoking the updating engine 220).

The warping engine 212 is configured to warp (merge) the images 126A, 126B, using the updated GMV and LMV and to determine a warping error. The warping error represents a difference (in color and geometry) between the overlapped portions of the images 126A, 126B. The warping engine 212 can determine a maximum error and/or a median error in order to determine a local error variation. The local error variation can be compared to the median error (average error per image) or an error threshold (e.g., a percentage of the maximum error per image).

The warping engine 212 can be connected to the labelling engine 214, that can label images based on the error variations. The labels can indicate a global pixel from a local pixel, the membership of each type of label indicating whether a pixel belongs to a background or a foreground. The labelling engine 214 can transmit the labels to the stabilization engine 216, that processes the labels to generate image stabilization (e.g., reducing the motion between images based on the identified labels).

The stabilization engine 216 can transmit the stabilized images to the AI DOF engine 218 that is configured to process the stabilized images for temporal noise reduction.

The AI DOF engine 218 can be a trainable machine learning (ML) model, trained to perform temporal noise reduction on different types of images including images acquired under dark conditions. In some examples, the AI DOF engine 218 is provided access to one or more libraries (e.g., TensorFlow) and one or more data processing frameworks (e.g., Apache Spark). In some examples, the AI DOF engine 218 processes input data to generate feature vectors (FVs), each feature vector being a multi-dimensional, numerical representation of a respective input data. In some examples, the AI DOF engine 218 uses a convolution neural network (CNN) as a classifier that includes multiple layers culminating in a final layer (e.g., a sigmoid layer) that outputs a set of class label predictions, each class label prediction representing a likelihood that the input data belongs to a respective class (image type). More generally, the CNN can include a feature learning portion and a classification portion. In some examples, the feature learning portion includes multiple convolution (+ rectified linear unit (ReLU)) layers with respective pooling layers, and the classification portion includes a flattening layer, a fully connected layer, and a classification layer (e.g., sigmoid)).

An example CNN includes, without limitation, pyramidal processing, warping, and net derivation of a cost volume (PWC-NET) model and recurrent all-pairs field transforms (RAFT) model. In accordance with implementations of the present disclosure, the local motion vector of an input data is extracted, using the CNN (e.g., PWC-NET and RAFT) before the final layer. For example, the feature vector can be extracted immediately before a fully connected layer, which precedes the final layer. Accordingly, the feature vector can be used in evaluating the input data instead of any label values of class labels that would otherwise be output from the final layer. In general, tuning of the AI DOF engine 218 is performed to improve an accuracy of the underlying ML model.

In some examples, the AI DOF engine 218 is iteratively trained, where, during an iteration, one or more parameters of the AI DOF engine 218 are adjusted, and an output is generated based on the training images. For each iteration, a loss value is determined based on a loss function. The loss value represents a degree of accuracy of the output of the AI DOF engine 218. The loss value can be described as a representation of a degree of difference between the output of the AI DOF engine 218 and an expected output of the AI DOF engine 218 (the expected output being provided from the training images). In some examples, if the loss value does not meet an expected value (e.g., is not equal to zero), parameters of the AI DOF engine 218 are adjusted in another iteration of training. In some instances, this process is repeated until the loss value meets the expected value (e.g., for each sample of the training images).

The trained AI DOF engine 218 is processing each reference image to determine the per pixel offset (e.g., LMV). After applying the LMVs to align images, temporal noise reduction can be achieved by weighted averaging pixels that correspond to a respective physical point. The AI DOF engine 218 can transmit the generated images with reduced temporal noise to the DOF engine 222.

The DOF engine 222 can determine relationships between consecutive images 126A, 126B to detect objects within the images and to track the motion of objects across images to estimate a current velocity and to predict an object position in a subsequent image (current image). Between consecutive images, the intensity $I$ can be a function of space $(x, t)$ and time $(t)$. The change in image intensity $I$ can be represented per pixel as $(dx, dy)$ over time $(t)$ to determine an intensity of the current image as $I(x+dx, y-dy, t+dt)$. The optical flow can be determined by assuming that pixel intensities of an object are constant between consecutive images and a Taylor Series Approximation is applied to remove common terms. Using the image gradients along the horizontal axis, the vertical axis, and time, the optical flow (motion over time) can be determined using Lucas-Kanade method. The optical flow can include sparse and dense optical flow. Sparse optical flow represents the flow vectors of some features of the images (e.g., pixels depicting the edges or corners of an object) within the frame. Dense optical flow represents the flow vectors of an entire image (all pixels) - up to one flow vector per pixel. The dense optical flow has higher accuracy than the sparse optical flow. In some implementations, the DOF engine 222 includes a machine learning model that optimizes that generalization of the optical flow between images 126A, 126B. The detected objects and/or the tracked objects can be used to generate the output image 126C aligning the original images 126A, 126B. The output image 126C can be displayed by the application 224 executed by the user device (e.g., the user device 104 described with reference to FIGS. 1A and 1B). Examples of original input images and output images are illustrated by FIGS. 3A - 3C.

FIG. 3A depicts an example image alignment 300A of incorrectly aligned images 126A, 126B generated by a single camera, in accordance with implementations of the present disclosure. In the example illustrated in FIG. 3A, global motion is included in the visual features of the images 126A, 126B. The global motion can be applicable to all pixels of the images 126A, 126B including static scenes 302. The scenes included in the images 126A, 126B are static, flat, and far relative to a focal length of the cameras that captured the images 126A, 126B. For the example image alignment 300A, the sensor can provide position data that is a rough (inaccurate) estimate of the position of the scene due to the change of the camera position relative to the distance between the camera and the imaged objects.

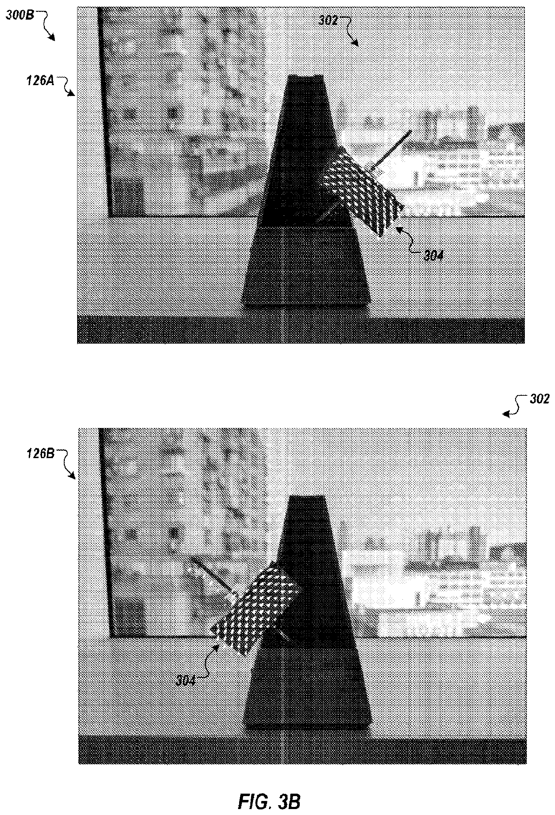

FIG. 3B depicts example image alignment 300B of images 126A, 126B including a static background 302 and a moving foreground 304 (e.g., a moving pendulum), in accordance with implementations of the present disclosure. The global motion can be estimated for the static background 302 of the images 126A, 126B. The moving foreground 304 can vary from one image 126A to another image 126B. The local motion can be solved by, a DOF engine, applying the DOF technique, as described with reference to FIG. 2 and further described with reference to FIGS. 4A and 4B.

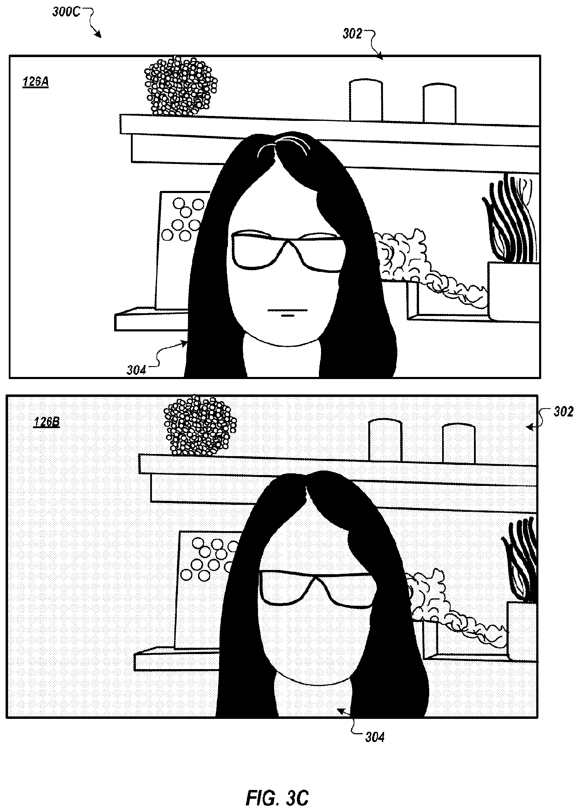

FIG. 3C depicts example image alignment 300C of images 126A, 126B captured by different cameras having different viewpoints, in accordance with implementations of the present disclosure, such as images that can be captured by two separate cameras of a user device as discussed with reference to FIG. 1B. The illustrated images 126A, 126B can be processed to determine global motion (e.g., linear shift) for background 302 and local motion for foreground 304. The local motion can be solved by, a DOF engine, applying the DOF technique, as described with reference to FIG. 2 and further described with reference to FIGS. 4A and 4B.

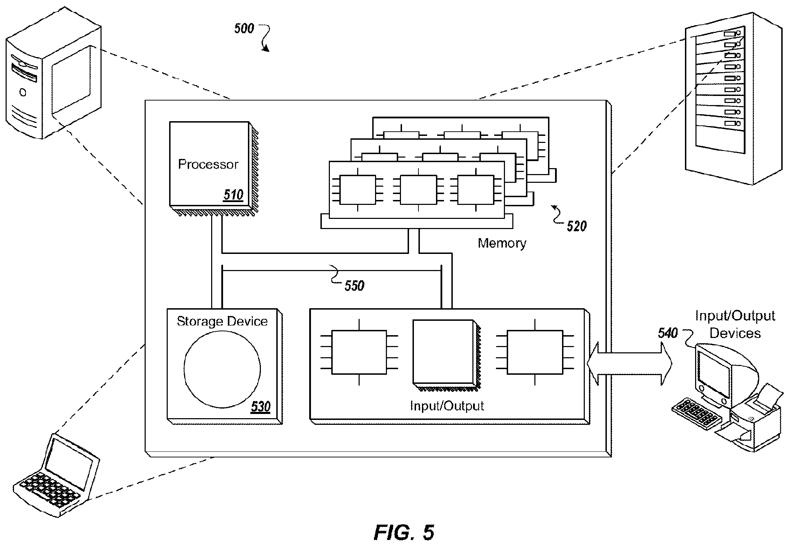

FIG. 4A depicts an example image alignment process 400 that can be executed in accordance with implementations of the present disclosure. In some examples, the example process 400 is provided using one or more computer-executable programs executed by one or more computing devices, such as an image alignment system 112 of a server system 102 or a user device 104, as described with reference to FIGS. 1A, 1B, and 2 or an example computing system 500 described with reference to FIG. 5.

At 402, it is determined whether a camera moved by processing position data received from sensor of user device including the camera. The sensor can include microphones, inertial measurement units, accelerometers, compasses, GPS units, radio devices, gyros, and/or other position sensors.

At 404, in response to determining that the camera moved, position data is transmitted to a homography engine (e.g., the homography engine 208 as described with reference to FIG. 2).

At 406, a homography is determined, by calling the homography engine (e.g., the homography engine 208 described with reference to FIG. 2).

At 407, a Gaussian pyramid is used, by calling a Gaussian pyramid engine (e.g., the Gaussian pyramid engine 210 described with reference to FIG. 2), to remove or reduce offset errors in the estimated homography of a current frame, by updating GMV and LMV values (starting from a low resolution and gradually increasing the resolution).

At 408, a warping operation is applied, by calling the warping engine (e.g., the warping engine 212 described with reference to FIG. 2), to the images to generate a warped image merging the original images.

At 409, the warped images can be processed to add labels to pixels of the warped image, by calling a labeling engine (e.g., the labeling engine 214 described with reference to FIG. 2). The labels include an indication of GMV or LMV identification for respective pixels.

At 410, a stable image is generated, by calling a stabilization engine (e.g., the stabilization engine 216 described with reference to FIG. 2) that generates image stabilization by reducing motion of identified objects between images, based on the identified labels.

At 412, an AI DOF engine (e.g., the AI DOF engine 218 as described with reference to FIG. 2) processes the stabilized images, using trained artificial intelligence models, to reduce temporal noise of the stabilized images, generating images with reduced temporal noise.

At 414, homography is updated using the images with reduced temporal noise and the labels of the pixels including GMV. The updated homography including pixels with GMV, is used to determine a confidence of the applied warping based on an error comparison. The GMV can be updated separate from the LMV.

At 416, DOF is initialized, by calling a DOF engine (e.g., the DOF engine 222 described with reference to FIG. 2) to determine relationships between consecutive images, to detect objects within the images and to track the motion of objects across images to estimate a current velocity and to predict an object position in a subsequent image (current image). The DOF can be initialized by a machine learning DOF at low resolution, using position data when the camera (user device) moves and updating the global homography.

At 418, an integer motion vector is recovered through matching for LMV. The integer motion vector is derived from consecutive images, by expressing the intensity $I$ as a function of space $(x, t)$ and time $(t)$. The change in image intensity $I$ can be represented per pixels as $(dx, dy)$ over time $(t)$ to determine an intensity of the current image as $I(x+dx, y+dy, t+dt)$. The optical flow can be determined by assuming that pixel intensities of an object are constant between consecutive images and a Taylor Series Approximation is applied to remove common terms.

At 420, fractional motion factor is determined by applying Lucas -Kanade technique. Using the image gradients along the horizontal axis, the vertical axis, and time, the optical flow ( motion over time) can be determined using Lucas-Kanade method.

At 422, dense optical flow is determined by representing the flow vectors of an entire image (all pixels) up to one flow vector per pixel. The dense optical flow can be determined using a machine learning model that optimizes that generalization of the optical flow between images. The objects detected and/or the tracked by DOF can be used to generate an output image including a DOF-based optimized alignment of the original images.

FIG. 4B depicts an example image alignment process 430 that can be executed in accordance with implementations of the present disclosure. In some examples, the example process 430 is provided using one or more computer-executable programs executed by one or more computing devices, such as an image alignment system 112 of a server system 102 or a user device 104, as described with reference to FIGS. 1A, 1B, and 2 or an example computing system 500 described with reference to FIG. 5.

At 432, data is received, by one or more processors, from one or more cameras (e.g., the cameras 122, 122A, 122B described with reference to FIGS. 1A, 1B, and 2) and a sensor (e.g., the sensor 124 described with reference to FIGS. 1A, 1B, and 2). The received data includes images and position data recorded within the same time interval. The images can capture different portions of a same image scene, corresponding to different views of a region of interest. The images can be recorded at the first frequency and the position data can be recorded at a second frequency that is higher than the first frequency. The higher frequency of position data detection enables derivation of multiple increments of camera (user device) motion that increases the accuracy of movement identification affecting the image capture.

At 434, the received data (position data) is processed to determine a range of motion of the camera (user device) between subsequently recorded images. The range of motion can be compared to a motion threshold that defines a motion interval within which image alignment is possible. For example, position data received from an inertial sensor (e.g., an accelerometer and/or a gyroscopic sensor) is condensed into a squared sum of readings in three axes to determine if motion is larger than the limit that can be accurately processed. The accelerometer measures the angular change with respect to the direction of gravity. The gyroscopic data can be converted into a homography that is used to determine if the mapping exceeds the image viewing window. In response to determining that image alignment is possible, the position data is used to generate a homography indicative of a rotation and a transition of the cameras during the recording of the images. In short exposure condition, two adjacent images 126A, 126B can be regarded as two planes. Four pairs of points in the two images the images 126A, 126B correspond to a unique homography. In response to detecting more than four pairs of points, homography can be obtained by a least square method, which can indicate in-plane rotation and transition. Motions of the cameras 122 including motions different from or additional to in-plane rotation and transition, can be derived from device position data received from the sensor 124. For example, the corresponding angular velocity, start time of each exposure and actual exposure time are being recorded. The camera rotation can be recovered from integrating the device position data (e.g., gyroscopic data) received from the sensor 124 (e.g., gyroscopic sensor). To account for measurement noise that causes motion drift, the computed homography can be corrected by using Unscented Kalman filter with homography from inertia senor as initial guess and feature points as observation. Applying the Unscented Kalman filter, a first image 126A is treated as a target image and the second image 126B as the current image. The relation between $i^{th}$ (i=1,2,...,n) matching points detected in the target image ($xi = [x_i, y_i, 1]^T$) and the current image ($xi = [x_i, y_i, 1]^T$) can be written as: $xi = Hx_i$, where $H$ is the homography including a matrix of motion vectors (GMV and LMV)

At 436, pixels of the images are grouped (e.g., in 3 pixels by 3 pixels groups) according to grouping parameters defining a first number of pixels to be selected from rows and a second number of pixels to be selected from columns. The grouping parameters define a first resolution of the images.

At 438, each group of pixels is analyzed to label motion vectors (LMV and GMV). A first type of motion includes global motion and is characterized by GMV. The global motion shares a global mapping by one or more groups of pixels. The groups of pixels can be labeled based on the homography mapping, H, between pixel destination pixel location ($x_d$, $y_d$) and source pixel location ($x_s$, $y_s$):

$$(x_d, y_d, 1)_t = k * H * (x_s, y_s, 1)$$

$$(x_d, y_d, 1) = k * H * (x_d + mx, y_d + my, 1)$$

The parameter k is a scaling factor and the motion vector in the X and Y direction is expressed as:

$$mx = x_d - x_s$$

$$my = y_d - y_s$$

Homography provides the mapping between two planar surfaces. It is applicable when a scene is far away relative to camera length, the camera undergoes a rotation or the distance to a scene is far larger than the distance between camera viewpoints. The groups of pixels identified as including an identified GMV are labeled with first labels indicating global motion of the respective groups of pixels. The remaining groups of pixels excluded from the groups of pixels having first labels, are identified as potentially including a local motion, being labeled with second labels indicating local motion having LMV.

At 440, a pixel map is created to indicate motion membership (e.g., GMV or LMV) of each pixel of the images by aggregating the identified motion vector labels.

At 442, GMV and LMV are updated at a second resolution that is higher than the first resolution, within a Gaussian Pyramid structure. The update can be repeated until an error of the image alignment is below a set error variation threshold. In some implementations, the update of GMV and LMV is optimized using a prediction model that is trained on particular image types, as described with reference to FIGS. 2 and 4A.

At 444, an output image is determined by aligning the at least two images using the updated GMV and the LMV (as described with reference to FIG. 2). The output image includes the at least two images aligned to each other. The image alignment includes a merge of the two images using the updated GMV and the LMV such that a transition (e.g., differences) between pairs of pixels (from the two images) corresponding to a respective physical point is minimized. Image alignment can include temporal noise reduction by using weighted averaging pixels that correspond to a respective physical point. In some example implementations, the machine learning model can be subjected to supervised pretraining, for example, to perform a selection of image alignment plans for particular image types. The machine learning model can be fine-tuned to optimize the sequence of image alignment actions within the image alignment plans to minimize the use of processing resources, by minimizing errors.

The example processes 400 and 430 advantageously enable optimized image alignment of images including a moving element. The example processes 400 and 430 provide an automated mechanism to perform image alignment optimized for correction of motion by using device position data that is available at higher data rates than camera frame rates and pixel integration that is in the scanline order. According to the described implementations, the GMV can be performed for a block of image rows for each device position data reading. The GMV for the next row-block uses a subsequent device position data reading. Breaking an image into row-blocks and repeatedly updating GMV and LMV provides an output image with reduced (or even completely removed) motion errors. The LMV is broken into the integer and the fractional portions and that are estimated separately. Group based template matching (at low resolution) is performed first to estimate the integer motion vector. Once the integer motion vector is obtained, Lucas-Kanade estimation for the fractional motion vector is applied. The sum of the integer and fractional motion vector defines the total motion vector. Estimating the integer LMV first determines if the Lucas-Kanade derived small motion assumption is guaranteed. Identification and correction of motion errors in aligned images, is essential to verify the accuracy of an output image. The execution of image alignment merging multiple images is improved by automatically executing motion error validation operations. The benefit of the example processes 400 and 430 stems from a consistent way to solve errors, which results in higher-quality, consistent output images free of motion errors.

Improving the functions supported by the image alignment plan can significantly increase the error complexity scenarios that can be solved. For example, traditional image alignment techniques include manual replacement of large sets of values that has an intrinsic risk of introducing new errors. The rules used by the example processes 400, can be extended to be mapped to any number of columns (e.g., hundreds or thousands) 100 of columns, generating actions that can optimize image alignment, avoiding introduction of additional errors.

Referring now to FIG. 5, a schematic diagram of an example computing system 500 is provided. The system 500 can be used for the operations described in association with the implementations described herein. For example, the system 500 can be included in any or all of the server components discussed herein, such as the components of the example system 100 described with reference to FIG. 1A or the user device 104 described with reference to FIG. 1B. The system 500 includes a processor 510, a memory 520, a storage device 530, and an input/output device 540. The components 510, 520, 530, 540 are interconnected using a system bus 550. The processor 510 is capable of processing instructions for execution of processes (e.g., example process 300 described with reference to FIG. 3) within the system 500. In some implementations, the processor 510 is a singlethreaded processor. In some implementations, the processor 510 is a multi-threaded processor. The processor 510 is capable of processing instructions stored in the memory 520 or on the storage device 530 to display graphical information for a user interface on the input/output device 540.

The memory 520 stores information within the system 500. In some implementations, the memory 520 is a computer-readable medium. In some implementations, the memory 520 is a volatile memory unit. In some implementations, the memory 520 is a non-volatile memory unit. The storage device 530 can provide mass storage for the system 500. In some implementations, the storage device 530 is a computer-readable medium. In some implementations, the storage device 530 can be a floppy disk device, a hard disk device, an optical disk device, or a tape device. The input/output device 540 provides input/output operations for the system 500. In some implementations, the input/output device 540 includes a keyboard and/or pointing device. In some implementations, the input/output device 540 includes a display unit for displaying graphical user interfaces.

The features described can be implemented in digital electronic circuitry, or in computer hardware, firmware, software, or in combinations of them. The apparatus can be implemented in a computer program product tangibly embodied in an information carrier (e.g., in a machine-readable storage device, for execution by a programmable processor), and method steps can be performed by a programmable processor executing a program of instructions to perform functions of the described implementations by operating on input data and generating output. The described features can be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a particular activity or bring about a particular result. A computer program can be written in any form of programming language, including compiled or interpreted languages, and it can be deployed in any form, including as a stand-alone program or as a module, component, subroutine, or other unit suitable for use in a computing environment.

Suitable processors for the execution of a program of instructions include, by way of example, both general and special purpose microprocessors, and the sole processor or one of multiple processors of any kind of computer. Generally, a processor receives instructions and data from a read-only memory or a random-access memory or both. Elements of a computer can include a processor for executing instructions and one or more memories for storing instructions and data. Generally, a computer can also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory can be supplemented by, or incorporated in, ASICs (applicationspecific integrated circuits).

To provide for interaction with a user, the features can be implemented on a computer having a display device such as a CRT (cathode ray tube) or LCD (liquid crystal display) monitor for displaying information to the user and a keyboard and a pointing device such as a mouse or a trackball by which the user can provide input to the computer.

The features can be implemented in a computer system that includes a back-end component, such as a data server, or that includes a middleware component, such as an application server or an Internet server, or that includes a front-end component, such as a client computer having a graphical user interface or an Internet browser, or any combination of them. The components of the system can be connected by any form or medium of digital data communication such as a communication network. Examples of communication networks include, for example, a LAN, a WAN, and the computers and networks forming the Internet.

The computer system can include clients and servers. A client and server are generally remote from each other and typically interact through a network, such as the described one. The relationship of client and server arises by virtue of computer programs running on the respective computers and having a client-server relationship to each other.

In addition, the logic flows depicted in the figures do not require the particular order shown, or sequential order, to achieve desirable results. In addition, other steps can be provided, or steps can be eliminated, from the described flows, and other components can be added to, or removed from, the described systems. Accordingly, other implementations are within the scope of the following claims.

A number of implementations of the present disclosure have been described. Nevertheless, it will be understood that the invention is set out in the appended independent claims and that advantageous embodiments are defined by the appended dependent claims.

**Claims**

1. A computer-implemented method implemented using one or more processors, the computer-implemented method comprising:

   receiving (432), from one or more cameras (122) and inertia sensors (124) of a user device (104), data comprising at least two images and device position data, the at least two images capturing portions of an image scene;
   determining (434), based on the device position data, a homography indicative of a movement of the user device;
   labeling (438), based on the homography, pixels of the at least two images using motion vectors comprising global motion vectors (GMV) or local motion vectors (LMV),
   **characterized in that**
   the GMV being assigned to portions of the at least two images identified, at a first resolution, by using the homography as comprising global motion, and the LMV being assigned to remaining portions of the at least two images excluded from the portions of the at least two images labeled with GMV;
   updating (442) the GMV and the LMV for each of the at least two images at a second resolution, wherein the second resolution is higher than the first resolution; and
   determining (444) an output image by aligning the at least two images using the updated GMV and the LMV.

2. The computer-implemented method of claim 1, wherein the at least two images comprise a moving element (304).

3. The computer-implemented method of claim 1, wherein the at least two images comprise a first image (126A) captured by a first camera (122A) having a first setting and a second image (126B) captured by a second camera (122B) having a second setting different from the first setting;
and optionally:
wherein the first camera and the second camera are included in a single device.

4. The computer-implemented method of claim 1, further comprising:
determining a motion range by processing the device position data to determine whether either of the global motion or the local motion is larger than a motion limit for a particular portion of the at least two images.

5. The computer-implemented method of claim 1, further comprising refining the homography using visual features or correspondence of motion vectors for the pixels of the at least two images.

6. The computer-implemented method of claim 5, wherein:

   the LMV is determined using group-based template matching; or
   each of the motion vectors comprises a sum of an integer motion vector and a fractional motion vector.

7. The computer-implemented method of claim 5, wherein the motion vectors define a vector map comprising the LMV in a first portion of the map and the GMV in a second portion of the map.

8. The computer-implemented method of claim 7, further comprising:

   converting a pixel motion type and the vector map into a multi-resolution representation; and optionally
   wherein the multi-resolution representation comprises a quadtree data structure.

9. The computer-implemented method of claim 1, wherein the inertia sensor comprises a gyroscopic sensor and wherein the GMV is determined for a block of image rows for each gyroscopic reading obtained from the gyroscopic sensor.

10. A computing device (104) comprising:

    an inertia sensor (124);
    one or more cameras (122); and
    one or more processors (128) performing operations comprising:

       receiving (432), from the one or more cameras and the inertia sensor of a user device, data comprising at least two images and device position data, the at least two images capturing portions of an image scene; determining (434), based on the device position data, a homography indicative of a movement of the user device; labeling (438), based on the homography, pixels of the at least two images using motion vectors comprising global motion vectors (GMV) or local motion vectors (LMV), **characterized in that**

the GMV being assigned to portions of the at least two images identified, at a first resolution, by using the homography as comprising global motion, and the LMV being assigned to remaining portions of the at least two images excluded from the portions of the at least two images labeled with GMV;

updating (442) the GMV and the LMV for each of the at least two images at a second resolution, wherein the second resolution is higher than the first resolution; and determining (444) an output image by aligning the at least two images using the updated GMV and the LMV.

11. The computing device of claim 10, wherein the at least two images comprise a moving element.

12. The computing device of claim 10, wherein the at least two images comprise a first image (126A) captured by a first camera (122A) having a first setting and a second image (126B) captured by a second camera (122B) having a second setting different from the first setting; and optionally wherein the first camera and the second camera are included in a single device.

13. The computing device of claim 10, wherein the operations further comprise:

a) determining a motion range by processing the device position data to determine whether either of the global motion or the local motion is larger than a motion limit for a particular portion of the at least two images; or
b) refining the homography using visual features or correspondence of motion vectors for the pixels of the at least two images, wherein the LMV is determined using group-based template matching, wherein each of the motion vectors comprises a sum of an integer motion vector and a fractional motion vector, wherein the motion vectors define a vector map comprising the LMV in a first portion of the map and the GMV in a second portion of the map.

14. The computing device of claim 10, wherein the inertia sensor comprises a gyroscopic sensor and wherein the GMV is determined for a block of image rows for each gyroscopic reading obtained from the gyroscopic sensor.

15. A non-transitory computer-readable media encoded with a computer program, the computer program comprising instructions that when executed by one or more computers cause the one or more computers to perform operations comprising:

receiving (432), from one or more cameras and inertia sensors of a user device, data comprising at least two images and device position data, the at least two images capturing portions of an image scene; determining (434), based on the device position data, a homography indicative of a movement of the user device; labeling (438), based on the homography, pixels of the at least two images using motion vectors comprising global motion vectors (GMV) or local motion vectors (LMV), the GMV being assigned to portions of the at least two images identified, at a first resolution, by using the homography as comprising global motion, and the LMV being assigned to remaining portions of the at least two images excluded from the portions of the at least two images labeled with GMV; updating (442) the GMV and the LMV for each of the at least two images at a second resolution, wherein the second resolution is higher than the first resolution; and determining (444) an output image by aligning the at least two images using the updated GMV and the LMV.

## Patentansprüche

1. Computerimplementiertes Verfahren, das unter Verwendung eines oder mehrerer Prozessoren implementiert wird, wobei das computerimplementierte Verfahren Folgendes umfasst:

Empfangen (432) von Daten, die mindestens zwei Bilder und Vorrichtungspositionsdaten umfassen, von einer oder mehreren Kameras (122) und einem oder mehreren Trägheitssensoren (124) einer Benutzervorrichtung (104), wobei die mindestens zwei Bilder Abschnitte einer Bildszene erfassen; Bestimmen (434) einer Homographie, die eine Bewegung der Benutzervorrichtung anzeigt, basierend auf den Vorrichtungspositionsdaten; Kennzeichnen (438) von Pixeln der mindestens zwei Bilder unter Verwendung von Bewegungsvektoren, die globale Bewegungsvektoren (GMV) oder lokale Bewegungsvektoren (LMV) umfassen, basierend auf der Homographie, **dadurch gekennzeichnet, dass**

die GMV Abschnitten der mindestens zwei Bilder zugeordnet werden, die mit einer ersten Auflösung durch Verwenden der Homographie als die globale Bewegung umfassend identifiziert wurden, und die LMV den verbleibenden Abschnitten der mindestens zwei Bilder zugeordnet werden, die von den mit GMV gekennzeichneten Abschnitten der mindestens zwei Bilder ausgeschlossen sind;

Aktualisieren (442) der GMV und der LMV für jedes der mindestens zwei Bilder mit einer zweiten Auflösung, wobei die zweite Auflösung höher als die erste Auflösung ist; und

Bestimmen (444) eines Ausgabebildes durch Ausrichten der mindestens zwei Bilder unter Verwendung der aktualisierten GMV und der aktualisierten LMV.

2. Computerimplementiertes Verfahren nach Anspruch 1, wobei die mindestens zwei Bilder ein bewegliches Element (304) umfassen.

3. Computerimplementiertes Verfahren nach Anspruch 1, wobei die mindestens zwei Bilder ein erstes Bild (126A) umfassen, das von einer ersten Kamera (122A), die eine erste Einstellung aufweist, aufgenommen wurde, und ein zweites Bild (126B), das von einer zweiten Kamera (122B), die eine zweite, von der ersten Einstellung verschiedene, Einstellung aufweist, aufgenommen wurde;
und optional:
wobei die erste Kamera und die zweite Kamera in einer einzigen Vorrichtung beinhaltet sind.

4. Computerimplementiertes Verfahren nach Anspruch 1, ferner umfassend:
Bestimmen eines Bewegungsbereichs durch Verarbeiten der Vorrichtungspositionsdaten, um zu bestimmen, ob eine von der globalen Bewegung oder der lokalen Bewegung größer ist als eine Bewegungsbegrenzung für einen bestimmten Abschnitt der mindestens zwei Bilder.

5. Computerimplementiertes Verfahren nach Anspruch 1, ferner umfassend Verfeinern der Homographie unter Verwendung visueller Merkmale oder einer Übereinstimmung von Bewegungsvektoren für die Pixel der mindestens zwei Bilder.

6. Computerimplementiertes Verfahren nach Anspruch 5, wobei:

der LMV unter Verwendung eines gruppenbasierten Vorlagenabgleichs bestimmt wird; oder jeder der Bewegungsvektoren eine Summe eines ganzzahligen Bewegungsvektors und eines gebrochenzahligen Bewegungsvektors umfasst.

7. Computerimplementiertes Verfahren nach Anspruch 5, wobei die Bewegungsvektoren eine Vektorkarte definieren, die die LMV in einem ersten Abschnitt der Karte und die GMV in einem zweiten Abschnitt der Karte umfasst.

8. Computerimplementiertes Verfahren nach Anspruch 7, ferner umfassend:

Umwandeln eines Pixelbewegungstyps und der Vektorkarte in eine Darstellung mit mehreren Auflösungen; und optional
wobei die Darstellung mit mehreren Auflösungen eine Quadtree-Datenstruktur umfasst.

9. Computerimplementiertes Verfahren nach Anspruch 1, wobei der Trägheitssensor einen Gyroskopsensor umfasst und wobei der GMV für einen Block von Bildzeilen für jede Gyroskopmessung bestimmt wird, die von dem Gyroskopsensor erhalten wird.

10. Rechenvorrichtung (104), umfassend:

einen Trägheitssensor (124);
eine oder mehrere Kameras (122); und
einen oder mehrere Prozessoren (128), die Operationen durchführen, die Folgendes umfassen:

Empfangen (432) von Daten, die mindestens zwei Bilder und Vorrichtungspositionsdaten umfassen, von der einen oder den mehreren Kameras und dem Trägheitssensor einer Benutzervorrichtung, wobei die mindestens zwei Bilder Abschnitte einer Bildszene erfassen;
Bestimmen (434) einer Homographie, die eine Bewegung der Benutzervorrichtung anzeigt, basierend auf den Vorrichtungspositionsdaten;
Kennzeichnen (438) von Pixeln der mindestens zwei Bilder unter Verwendung von Bewegungsvektoren, die globale Bewegungsvektoren (GMV) oder lokale Bewegungsvektoren (LMV) umfassen, basierend auf der Homographie, **dadurch gekennzeichnet, dass**

die GMV Abschnitten der mindestens zwei Bilder zugeordnet werden, die mit einer ersten Auflösung durch Verwenden der Homographie als die globale Bewegung umfassend identifiziert wurden, und die LMV den verbleibenden Abschnitten der mindestens zwei Bilder zugeordnet werden, die von den mit GMV gekennzeichneten Abschnitten der mindestens zwei Bilder ausgeschlossen sind;

Aktualisieren (442) der GMV und der LMV für jedes der mindestens zwei Bilder mit einer zweiten Auflösung, wobei die zweite Auflösung höher als die erste Auflösung ist; und

Bestimmen (444) eines Ausgabebildes durch Ausrichten der mindestens zwei Bilder unter Verwendung der aktualisierten GMV und der aktualisierten LMV.

11. Rechenvorrichtung nach Anspruch 10, wobei die mindestens zwei Bilder ein bewegliches Element umfassen.

12. Rechenvorrichtung nach Anspruch 10, wobei die mindestens zwei Bilder ein erstes Bild (126A) umfassen, das von einer ersten Kamera (122A), die eine erste Einstellung aufweist, aufgenommen wurde, und ein zweites Bild (126B), das von einer zweiten Kamera (122B), die eine zweite, von der ersten Einstellung verschiedene, Einstellung aufweist, aufgenommen wurde; und optional, wobei die erste Kamera und die zweite Kamera in einer einzigen Vorrichtung beinhaltet sind.

13. Rechenvorrichtung nach Anspruch 10, wobei die Operationen ferner Folgendes umfassen:

a) Bestimmen eines Bewegungsbereichs durch Verarbeiten der Vorrichtungspositionsdaten, um zu bestimmen, ob eine von der globalen Bewegung oder der lokalen Bewegung größer ist als eine Bewegungsbegrenzung für einen bestimmten Abschnitt der mindestens zwei Bilder; oder

b) Verfeinern der Homographie unter Verwendung visueller Merkmale oder einer Übereinstimmung von Bewegungsvektoren für die Pixel der mindestens zwei Bilder, wobei der LMV unter Verwendung eines gruppenbasierten Vorlagenabgleichs bestimmt wird, wobei jeder der Bewegungsvektoren eine Summe eines ganzzahligen Bewegungsvektors und eines gebrochenzahligen Bewegungsvektors umfasst, wobei die Bewegungsvektoren eine Vektorkarte definieren, die die LMV in einem ersten Abschnitt der Karte und die GMV in einem zweiten Abschnitt der Karte umfasst.

14. Rechenvorrichtung nach Anspruch 10, wobei der Trägheitssensor einen Gyroskopsensor umfasst und wobei der GMV für einen Block von Bildzeilen für jede Gyroskopmessung bestimmt wird, die von dem Gyroskopsensor erhalten wird.

15. Nichtflüchtiges computerlesbares Medium, das mit einem Computerprogramm codiert ist, wobei das Computerprogramm Anweisungen umfasst, die, wenn sie von einem oder mehreren Computern ausgeführt werden, den einen oder die mehreren Computer veranlassen, Operationen durchzuführen, umfassend:

Empfangen (432) von Daten, die mindestens zwei Bilder und Vorrichtungspositionsdaten umfassen, von einer oder mehreren Kameras und einem oder mehreren Trägheitssensoren einer Benutzervorrichtung, wobei die mindestens zwei Bilder Abschnitte einer Bildszene erfassen;

Bestimmen (434) einer Homographie, die eine Bewegung der Benutzervorrichtung anzeigt, basierend auf den Vorrichtungspositionsdaten;

Kennzeichnen (438) von Pixeln der mindestens zwei Bilder unter Verwendung von Bewegungsvektoren, die globale Bewegungsvektoren (GMV) oder lokale Bewegungsvektoren (LMV) umfassen, basierend auf der Homographie, wobei die GMV Abschnitten der mindestens zwei Bilder zugeordnet werden, die mit einer ersten Auflösung durch Verwenden der Homographie als die globale Bewegung umfassend identifiziert wurden, und die LMV den verbleibenden Abschnitten der mindestens zwei Bilder zugeordnet werden, die von den mit GMV gekennzeichneten Abschnitten der mindestens zwei Bilder ausgeschlossen sind;

Aktualisieren (442) der GMV und der LMV für jedes der mindestens zwei Bilder mit einer zweiten Auflösung, wobei die zweite Auflösung höher ist als die erste Auflösung; und

Bestimmen (444) eines Ausgabebildes durch Ausrichten der mindestens zwei Bilder unter Verwendung der aktualisierten GMV und der aktualisierten LMV.

## Revendications

1. Procédé mis en œuvre par ordinateur mis en œuvre à l'aide d'un ou plusieurs processeurs, le procédé mis en œuvre par ordinateur comprenant :

la réception (432), à partir d'une ou plusieurs caméras (122) et capteurs d'inertie (124) d'un dispositif utilisateur (104), de données comprenant au moins deux images et des données de position de dispositif, les au moins deux images capturant des parties d'une scène d'image ;

la détermination (434), sur la base des données de position de dispositif, d'une homographie indicative d'un mouvement du dispositif utilisateur ;

l'étiquetage (438), sur la base de l'homographie, de pixels des au moins deux images à l'aide de vecteurs de mouvement comprenant des vecteurs de mouvement global (GMV) ou des vecteurs de mouvement local (LMV),

**caractérisé en ce que**

les GMV étant attribué à des parties des au moins deux images identifiées, à une première résolution, en utilisant l'homographie comme comprenant le mouvement global, et le LMV étant attribué aux parties restantes des au moins deux images exclues des parties des au moins deux images étiquetées avec les GMV ;

la mise à jour (442) du GMV et du LMV pour chacune des au moins deux images à une seconde résolution, dans lequel la seconde résolution est supérieure à la première résolution ; et la détermination (444) d'une image de sortie en alignant les au moins deux images en utilisant le GMV et le LMV mis à jour.

2. Procédé mis en œuvre par ordinateur selon la revendication 1, dans lequel les au moins deux images comprennent un élément mobile (304).

3. Procédé mis en œuvre par ordinateur selon la revendication 1, dans lequel les au moins deux images comprennent une première image (126A) capturée par une première caméra (122A) ayant un premier réglage et une seconde image (126B) capturée par une seconde caméra (122B) ayant un second réglage différent du premier réglage ; et éventuellement : dans lequel la première caméra et la seconde caméra sont intégrées dans un seul dispositif.

4. Procédé mis en œuvre par ordinateur selon la revendication 1, comprenant en outre : la détermination d'une plage de mouvement en traitant les données de position de dispositif pour déterminer si le mouvement global ou le mouvement local est supérieur à une limite de mouvement pour une partie particulière des au moins deux images.

5. Procédé mis en œuvre par ordinateur selon la revendication 1, comprenant en outre l'amélioration de l'homographie à l'aide de caractéristiques visuelles ou de la correspondance de vecteurs de mouvement pour les pixels des au moins deux images.

6. Procédé mis en œuvre par ordinateur selon la revendication 5, dans lequel :

le LMV est déterminé à l'aide d'une correspondance de modèles basée sur le groupe ; ou chacun des vecteurs de mouvement comprend une somme d'un vecteur de mouvement entier et d'un vecteur de mouvement fractionnaire.

7. Procédé mis en œuvre par ordinateur selon la revendication 5, dans lequel les vecteurs de mouvement définissent une carte vectorielle comprenant le LMV dans une première partie de la carte et le GMV dans une seconde partie de la carte.

8. Procédé mis en œuvre par ordinateur selon la revendication 7, comprenant en outre :

la conversion d'un type de mouvement de pixel et de la carte vectorielle en une représentation multi-résolution ; et éventuellement dans lequel la représentation multi-résolution comprend une structure de données quadtree.

9. Procédé mis en œuvre par ordinateur selon la revendication 1, dans lequel le capteur d'inertie comprend un capteur gyroscopique et dans lequel le GMV est déterminé pour un bloc de lignes d'image pour chaque lecture gyroscopique obtenue à partir du capteur gyroscopique.

10. Dispositif informatique (104) comprenant :

un capteur d'inertie (124) ; une ou plusieurs caméras (122) ; et un ou plusieurs processeurs (128) réalisant des opérations comprenant :

la réception (432), à partir des une ou plusieurs caméras et du capteur d'inertie d'un dispositif utilisateur, de données comprenant au moins deux images et des données de position de dispositif, les au moins deux images capturant des parties d'une scène d'image ;

la détermination (434), sur la base des données de position de dispositif, d'une homographie indicative d'un mouvement du dispositif utilisateur ;

l'étiquetage (438), sur la base de l'homographie, de pixels des au moins deux images à l'aide de vecteurs de mouvement comprenant des vecteurs de mouvement global (GMV) ou des vecteurs de mouvement local (LMV), **caractérisé en ce que**

les GMV étant attribué à des parties des au moins deux images identifiées, à une première résolution, en utilisant l'homographie comme comprenant le mouvement global, et le LMV étant attribué aux parties restantes des au moins deux images exclues des parties des au moins deux images étiquetées avec les GMV ;

la mise à jour (442) du GMV et du LMV pour chacune des au moins deux images à une seconde résolution, dans lequel la seconde résolution est supérieure à la première résolution ; et

la détermination (444) d'une image de sortie en alignant les au moins deux images en utilisant le GMV et le LMV mis à jour.

11. Dispositif informatique selon la revendication 10, dans lequel les au moins deux images comprennent un élément mobile.

12. Dispositif informatique selon la revendication 10, dans lequel les au moins deux images comprennent une première image (126A) capturée par une première caméra (122A) ayant un premier réglage et une seconde image (126B) capturée par une seconde caméra (122B) ayant un second réglage différent du premier réglage ; et, éventuellement dans lequel la première caméra et la seconde caméra sont incluses dans un seul dispositif.

13. Système informatique selon la revendication 10, dans lequel les opérations comprennent en outre :

a) la détermination d'une plage de mouvement en traitant les données de position de dispositif pour déterminer si le mouvement global ou le mouvement local est supérieur à une limite de mouvement pour une partie particulière des au moins deux images ;
ou

b) l'amélioration de l'homographie à l'aide de caractéristiques visuelles ou une correspondance de vecteurs de mouvement pour les pixels des au moins deux images, dans lequel le LMV est déterminé à l'aide d'une correspondance de modèle basée sur le groupe, dans lequel chacun des vecteurs de mouvement comprend une somme d'un vecteur de mouvement entier et d'un vecteur de mouvement fractionnaire, dans lequel les vecteurs de mouvement définissent une carte vectorielle comprenant le LMV dans une première partie de la carte et le GMV dans une seconde partie de la carte.

14. Dispositif informatique selon la revendication 10, dans lequel le capteur d'inertie comprend un capteur gyroscopique et dans lequel le GMV est déterminé pour un bloc de lignes d'image pour chaque lecture gyroscopique obtenue à partir du capteur gyroscopique.

15. Un ou plusieurs supports lisibles par ordinateur non transitoires codés avec un programme informatique, le programme informatique comprenant des instructions qui lorsqu'elles sont exécutées par un ou plusieurs ordinateurs amènent les un ou plusieurs ordinateurs à réaliser des opérations comprenant :

la réception (432), à partir d'une ou plusieurs caméras et de capteurs d'inertie d'un dispositif utilisateur, de données comprenant au moins deux images et des données de position de dispositif, les au moins deux images capturant des parties d'une scène d'image ;

la détermination (434), sur la base des données de position de dispositif, d'une homographie indicative d'un mouvement du dispositif utilisateur ;

l'étiquetage (438), basé sur l'homographie, de pixels des au moins deux images à l'aide de vecteurs de mouvement comprenant des vecteurs de mouvement global (GMV) ou de vecteurs de mouvement local (LMV), le GMV étant attribué à des parties des au moins deux images identifiées, à une première résolution, en utilisant l'homographie comme comprenant un mouvement global, et le LMV étant attribué à des parties restantes des au moins deux images exclues des parties des au moins deux images étiquetées avec le GMV ;

la mise à jour (442) du GMV et du LMV pour chacune des au moins deux images à une seconde résolution, dans lequel la seconde résolution est supérieure à la première résolution ; et

la détermination (444) d'une image de sortie en alignant les au moins deux images en utilisant le GMV et le LMV mis à jour.

SERVER SYSTEM 102

INTERFACE 116A

108

IMAGE ALIGNMENT SYSTEM 112

DOF ENGINE 120

PROCESSING RESOURCES 114

CAMERA SETTINGS 116

RULES 118

DATABASE 110A

IMAGE 126

POSITION DATA 127

NETWORK 108

100

USER DEVICE 104

SENSOR 124

PROCESSOR(S) 128

CLIENT APPLICATION 132

CAMERA 122

INTERFACE 116B

GUI 130

DATABASE 110B

IMAGE 126

POSITION DATA 127

FIG. 1A

**FIG. 1B**

EP 4 677 859 B1

FIG. 2

FIG. 3A

FIG. 3B

FIG. 3C

*FIG. 4A*

430

RECEIVE DATA
**432**

DETERMINE HOMOGRAPHY
**434**

GROUP PIXELS OF THE IMAGES
**436**

LABEL MOTION VECTORS
**438**

GENERATE PIXEL MAP
**440**

UPDATE GMV AND LMV
**442**

DETERMINE OUTPUT IMAGE
**444**

*FIG. 4B*

**FIG. 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021334934 A1

- WO 2014193670 A2